Europäisches Patentamt

**European Patent Office**

Office européen des brevets

(19)

(11) Publication number : **0 398 675 B1**

(12) # EUROPEAN PATENT SPECIFICATION

(45) Date of publication of patent specification :
**14.07.93 Bulletin 93/28**

(51) Int. Cl.⁵ : **F04C 18/16**

(21) Application number : **90305262.9**

(22) Date of filing : **16.05.90**

(54) **Rotor.**

(30) Priority : **18.05.89 JP 56470/89 U**

(43) Date of publication of application :
**22.11.90 Bulletin 90/47**

(45) Publication of the grant of the patent :
**14.07.93 Bulletin 93/28**

(84) Designated Contracting States :
**DE FR GB**

(56) References cited :
**US-A- 4 764 098
US-A- 4 813 857
PATENT ABSTRACTS OF JAPAN, unexamined
applications, M field, vol. 8, no. 166, August 2,
1984, THE PATENT OFFICE JAPANESE GOV-
ERNMENT; page 13 M 315**

(73) Proprietor : **ISHIKAWAJIMA-HARIMA
JUKOGYO KABUSHIKI KAISHA
2-1, Ote-machi 2-chome
Chiyoda-ku Tokyo-to (JP)**

(72) Inventor : **Matsubara, Hidetsugu
No. 597-134. Matsudoshinden
Matsudo-shi, Chiba-ken (JP)**
Inventor : **Iguchi, Yuichi
No. 17-7, Shinsen-cho
Shibuya-ku, Tokyo-to (JP)**
Inventor : **Tanaka, Shinya
No. 1-14-16, Sakura-cho
Koganei-shi, Tokyo-to (JP)**
Inventor : **Miyashita, Kazuya
No. 4-10-17-102, Takahama
Chiba-shi, Chiba-ken (JP)**

(74) Representative : **Jennings, Nigel Robin et al
KILBURN & STRODE 30 John Street
London WC1N 2DD (GB)**

## Description

The present invention relates to a rotor, particularly for use in a screw type supercharger, a screw type compressor or other rotary screw machines. Rotors of this kind are known eg. from US-A-4 764 098.

A known screw type supercharger for generating pressurised air to be directed to an engine is shown in the accompanying Figures 1 to 3 in which:-

Figure 1 is a schematic cross-section through the supercharger;

Figure 2 is a schematic section on the line II-II in Figure 1; and

Figure 3 is a schematic longitudinal section through a rotor of the supercharger of Figure 1.

A casing 1 accommodates a screw type male rotor 2 having four teeth or lobes and a screw type female rotor 3 having six teeth, which rotors 2 and 3 are intermeshingly disposed side by side. The rotors 2 and 3 have shafts 4 supported at each end by bearings 5 and are driven from an engine. Rotation of the rotors 2 and 3 causes the air from an inlet port 6 at one side of the casing to be compressed and discharged into the engine through a discharge port 7 at the opposite side of the casing 1.

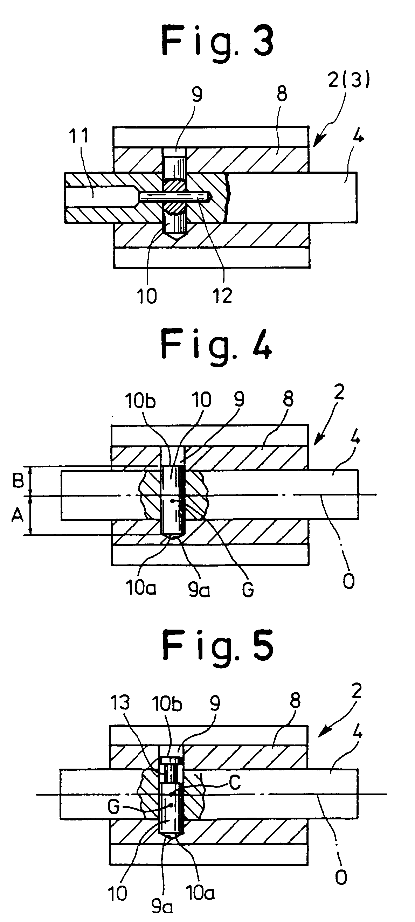

In the rotors 2 and 3, as shown in Figure 3, the shaft 4 extends axially through a rotor barrel 8. A blind hole 9 extends through the wall of the barrel on one side, through the shaft 4, and part of the way through the wall of the barrel on the opposite side. A retaining pin 10 together with an adhesive is force fitted into the hole 9 so as to prevent the barrel 8 from being displaced relative to the shaft 4 in the axial and rotational directions, for example during rotation of the rotor. In order to prevent the pin 10 from falling out of the hole 9 due to centrifugal force resulting from the high rotational speed of the rotor, a security pin 12 is driven into a hole 11 extending axially through the shaft 4 and through the pin 10.

In this construction the hole 9 for receiving the pin 10 must be machined to a high degree of accuracy so as to enable the pin 10 to be tightly fitted. Even given the tight fit of the pin 10, the security pin 12 and hole 11 are still required.

Accordingly, it is an object of the present invention to provide a rotor for a rotary screw machine in which the barrel is retained on the axial shaft in a manner which is simpler and cheaper than that previously used and in which, in particular, the security pin and associated hole which were previously necessary may be omitted entirely.

According to the present invention a rotor of the type comprising a rotor barrel and a shaft extending axially therethrough, the rotor having one or more holes each extending transverse to the axis of the shaft through the wall of the barrel on one side thereof, through the shaft and partially through the wall of the barrel on the opposite side thereof, a retaining pin being located within each hole, is characterised in that the centre of gravity of the or each retaining pin is eccentrically disposed and lies between the axis of the shaft and the respective opposite side of the barrel.

When the rotor in accordance with the invention is rotated a centrifugal force thus acts on each pin urging it towards the bottom of its respective hole so that the pin is prevented from moving or falling out. Thus the present invention eliminates the need to machine the hole which receives the retaining pin to such a degree of accuracy that the pin is a tight fit within it and eliminates the need for a securing pin and an associated hole so that the manufacture of the rotor is simplified.

Whilst the rotor may have only a single pin and associated hole, in an alternative embodiment it has two or more holes and two or more retaining pins, the pins being so arranged and constructed such that, on rotation of the rotor, the centrifugal forces exerted on the pins substantially balance, that is to say they substantially cancel out whereby the rotor will rotate without vibration. If the rotor has an even number of teeth this may be achieved by providing two holes and two pins, which holes extend in substantially opposed directions, whereby the centres of gravity of the two pins are symmetrically and oppositely eccentrically disposed. If the rotor has an odd number of teeth the rotor may have three holes and three pins, two of the holes extending at equal and opposite oblique angles to the third hole. The invention also embraces a rotary screw machine including such a rotor and in this event it is preferred that the hole or holes are located in the rotor adjacent the discharge of the machine.

Further features and details of the invention will be apparent from the following description of a number of specific embodiments which is given by way of example with reference to Figures 4 to 10 of the accompanying drawings, in which:-

Figure 4 is a schematic longitudinal section through a first embodiment of the present invention;

Figure 5 is a schematic longitudinal section through a second embodiment of the present invention;

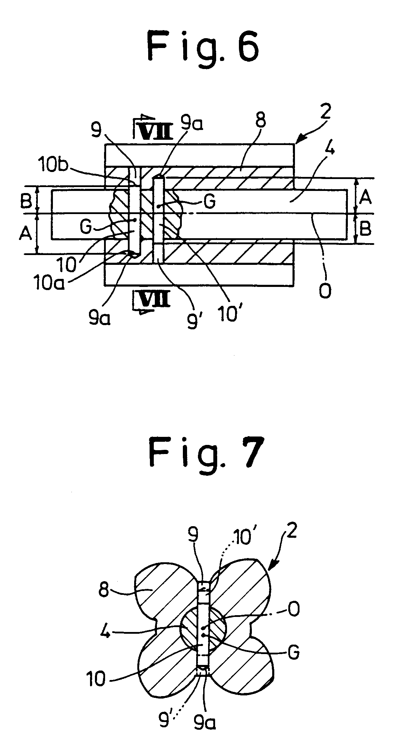

Figure 6 is a schematic longitudinal section through a third embodiment of the present invention;

Figure 7 is a section on the line VII-VII in Figure 6;

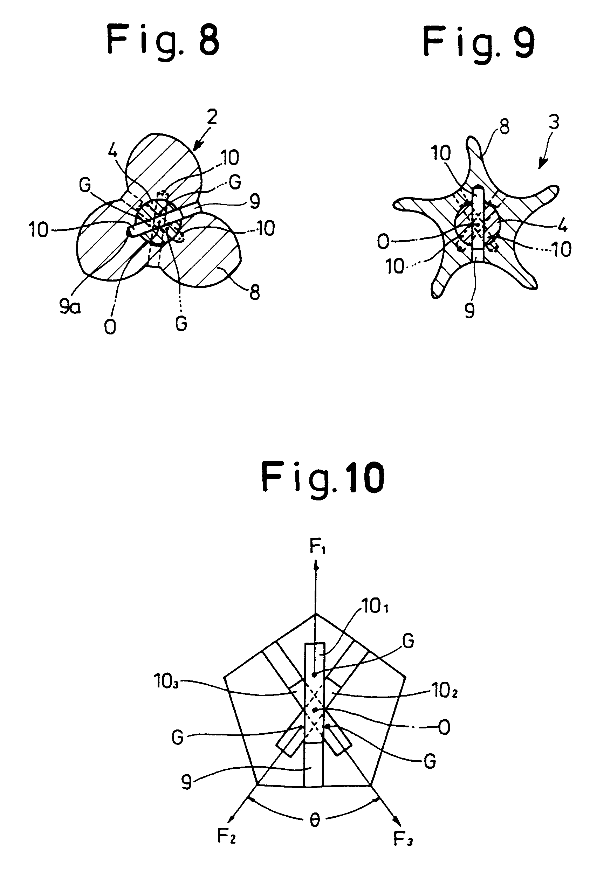

Figure 8 is a schematic cross-section through a fourth embodiment of the present invention;

Figure 9 is a schematic cross-section through a fifth embodiment of the present invention; and

Figure 10 is a diagrammatic representation of the forces acting on the retaining pins in the fifth embodiment.

The same reference numerals are used to designate similar parts throughout the Figures.

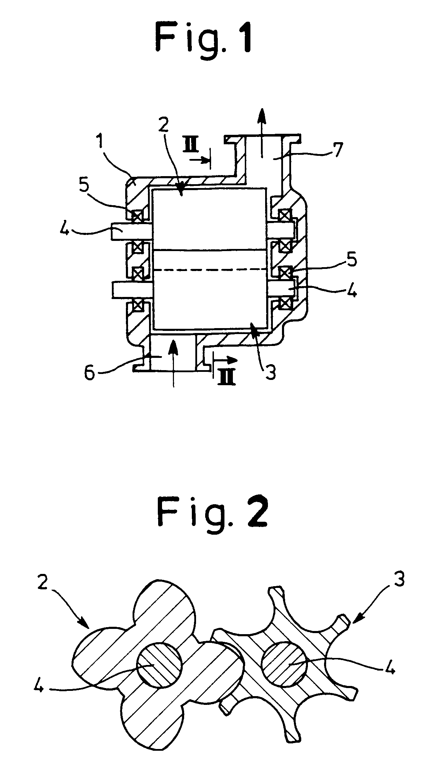

Referring firstly to Figure 4, in the first embodiment the invention is applied to a male rotor 2 with four teeth for use in a screw type supercharger. As in the case of the conventional rotor shown in Figure 2, the rotor shaft 4 extends through the rotor barrel 8 along the axis thereof. A retaining pin receiving hole 9 extends through the wall of the barrel 8 on one side and continues part of the way through the wall on the opposite side of the barrel 8. A retaining pin 10 is driven into the hole 9 to connect the barrel 8 to the shaft 4.

The length of the retaining pin 10 is less than twice the distance from the axis 0 of the shaft 4 to the bottom 9a of the hole 9 so that the centre of gravity G of the pin 10, when the pin is in place, is eccentrically located with respect to the axis 0, towards the end 9a of the hole 9. Thus, when the pin 10 has been driven into the hole 9, the distance A from the leading end 10a of the pin 10 to the axis 0 is greater than the distance B from the rear end 10b of the pin 10 to the axis 0. After the pin 10 has been driven into the hole 9, the inlet of the hole 9 is caulked, using a hammer or the like, so as to prevent the pin 10 from pulling out when the rotor is not rotating.

The pin 10, driven to the bottom 9a of the hole 9, securely joins the barrel 8 with the shaft 4, thereby preventing the barrel 8 from being displaced relative to the shaft 4 in the axial and rotational directions. The pin 10 remains in the hole 9 without coming out of the hole 9, when the rotor rotates about the shaft 4, since the centre of gravity G of the pin 10 is located off the axis 0, towards the bottom of the hole 9. Therefore the centrifugal force generated by rotation urges the pin 9 towards the bottom 9a of the hole 9. The higher the rotational speed of the rotor, the greater is the force with which the pin 10 is urged towards the bottom 9a of the hole 9. It is therefore only necessary for the pin 10 to be a relatively loose or push fit in the hole 9 and the hole need not be machined accurately. The pin 12 and hole 11 illustrated in Figure 3 may be omitted entirely.

Referring next to Figure 5, in the second embodiment of the present invention the retaining pin 10 has a non-uniform cross-section such that the centre of gravity G of the pin 10 lies towards its leading end 10a rather than half way along its length at C. Preferably, the pin 10 has an annular recess 13 between the rear end 10b and the mid-point C.

Because of the annular recess 13 on the pin 10 adjacent to its rear end 10b, the half of the pin 10 extending between the rear end 10b and the mid-point C is lighter than the remaining half of the pin 10 extending between the leading end 10a and the mid-point C. Therefore, the centre of gravity G of the pin 10 lies towards the leading end 10a rather than at the mid-point C. In use, the pin 10 is driven into the hole 9 until the mid-point C of the pin 10 coincides with the axis 0 of the shaft 4. The centre of gravity G of the pin 10 is then located off the axis of the shaft 4, towards the bottom 9a of the hole 9. Thus, the same effect is achieved as that achieved in the first embodiment.

Although the retaining pin 10 is shown with the mid-point C of the pin 10 coincident with the axis 0 of the rotor shaft 4, it should be noted that, since the shape of the pin has been modified to move the centre of gravity G towards the leading end 10a, the position of the mid-point C may not necessarily lie on the axis of the rotor shaft when the pin is in place.

Referring to Figures 6 and 7, the third embodiment of the present invention is substantially similar to the first embodiment except that two retaining-pin receiving holes 9 are formed in the rotor. Preferably, the holes are positioned so that, when the rotor is in use, they are in the vicinity of the discharge port of the screw type supercharger. In the illustrated male rotor 2 with four teeth one hole 9 extends from the base of a groove between adjacent teeth or ridges of the barrel through the wall of the barrel and continues part of the way through the wall on the opposite side. The other hole 9' extends parallel with the first hole 9 in the opposite direction thereto and has the same depth and diameter as the first hole 9. The holes are axially spaced with respect to the shaft axis 0. The length of the retaining pins 10 and 10' to be driven into the holes 9 and 9' is shorter than twice the distance from the axis 0 of the shaft 4 to the bottom 9a of each hole. As a result, when the pins 10 and 10' are driven into the holes 9 and 9', the centre of gravity G of each of the pins 10 and 10' lies off the axis 0 of the shaft 4, towards the respective bottoms 9a of the holes.

The two retaining pins 10 and 10', when in place, are aligned at substantially 180° to each other with respect to the shaft axis 0, i.e. in substantially opposite directions. Thus, when the rotor rotates the unbalancing effects caused by each of the pins 10 and 10' due to their centres of gravity G not lying on the shaft axis 0 cancel each other. Due to the fact that the pins 10 and 10' are received in the portion of the rotor in the vicinity of the discharge port or at the high-pressure side of the screw type supercharger, the end clearance between the discharge end of the rotors and the end wall can be maintained substantially constant irrespective of thermal expansion, thus ensuring a high degree of discharging accuracy.

The arrangement of the third embodiment may be equally applied to a female rotor with six teeth as shown in Figure 2 or, indeed, any other rotor having an even number of teeth.

Figure 8 shows a fourth embodiment of the present invention in which the invention is applied to a male rotor with three teeth. The rotor has three holes, each extending from a groove between respective adjacent pairs of teeth on the barrel, through the wall of the barrel and continuing part of the way through the wall of the barrel on the opposite side. The holes are spaced apart axially with respect to the shaft axis 0 and are oriented at intervals of substantially 120° around the axis. The holes are formed in a portion of the rotor which is near the discharge port when the rotor is in place in a supercharger or compressor. Pins 10 are driven into each of the holes 9 such that the centres of gravity G of the respective pins 10 are located off the shaft axis 0 towards the respective hole bottoms 9a. Each centre of gravity G lies at the same distance from the base of the associated groove on the barrel 8.

Accordingly, any unbalancing effect which may be caused when the rotor rotates, due to the centres of gravity G of each pin 10 being off centre will be cancelled by the effects of the other two pins 10. Thus, vibration of the rotor during rotation is prevented.

Figure 9 shows a fifth embodiment of the present invention in which the invention is applied to a female rotor 3 having five teeth. Retaining pins 10 are driven into holes extending from the bottom of grooves or recesses between the teeth of the rotor barrel 8. It is advantageous from considerations of accuracy of machining and convenience to make the holes in the recesses rather than the teeth. However, with the rotor having five teeth it is then impossible to arrange the holes at equal angular intervals around the shaft axis 0, as in the third and fourth embodiments. This problem is especially apparent in a female rotor which has thin teeth into which it would be difficult to drill a hole. Therefore, the arrangement shown in Figure 9 is employed whereby the shapes and/or weight of the pins are different to compensate for the irregularity of their distribution.

Referring now to Figure 10, a first pin $10_1$, when in place, extends in a first diametrical direction with respect to the barrel 8. Second and third pins $10_2$ and $10_3$, when in place, extend in second and third diametrical directions, each at the same obtuse angle of more than e.g. 120° to the first direction and with an angle between them of $\theta$. The depths to which each pin is driven and the shapes and weight of the pins are selected so that when the rotor rotates, the centrifugal force $F_1$ due to the first pin $10_1$, for any given speed of rotation, is balanced by the centrifugal forces $F_2$ and $F_3$ due to the second and third pins $10_2$ and $10_3$. The magnitudes of the centrifugal forces satisfy the following equation:

$$F_2 = F_3 = \frac{F_1}{2\cos(\theta/2)}$$

In this embodiment, the rotor is pentagonal, i.e. it has five-fold rotational symmetry and $\theta = 72°$ so that

$$F_2 = F_3 = \frac{F_1}{1.618}$$

While the fifth embodiment has been described with reference to Figure 9 which shows a rotor having five teeth, it should be noted that the fifth embodiment may be equally applied to any rotor with an odd number of teeth except one.

In the fifth embodiment the same functions and effects are achieved as those achieved in any of the first to fourth embodiments described above. The above embodiments relate to rotors for screw type superchargers, but the invention may be equally applied to rotors for use in screw type compressors or the like in the ways described above. It has been specified tht the retaining pins should be in the portion of the rotor near the discharge port, but the present invention is not limited to this design and the retaining pin receiving holes may be located at any positions.

## Claims

1. A rotor (2;3) comprising a rotor barrel (8) and a shaft (4) extending axially therethrough, the rotor (2;3) having one or more holes (9) each extending transverse to the axis (0) of the shaft (4) through the wall of the barrel (8) on one side thereof, through the shaft (4) and partially through the wall of the barrel (8) on the opposite side thereof, a retaining pin (10) being located within each hole (9), characterised in that the centre of gravity (G) of the or each retaining pin (10) is eccentrically disposed and lies between the axis (0) of the shaft (4) and the respective opposite side of the barrel.

2. A rotor (2;3) as claimed in claim 1 having two or more holes (9) and two or more retaining pins (10) characterised in that the arrangement and construction of the pins (10) are such that, on rotation of the rotors (2;3) the centrifugal forces exerted on the pins (10) substantially balance.

3. A rotor (2;3) as claimed in claim 2 having an even number of teeth characterised in that the rotor (2;3) has two holes (9) and two pins (10) and that the holes extend in substantially opposed directions.

4. A rotor (2;3) as claimed in claim 2 having an odd number of teeth characterised in that the rotor (2;3) has three holes (9) and three pins (10) and that two of the holes (9) extend at equal and opposite oblique angles to the third hole (9).

5. A screw type supercharger or screw type compressor including a discharge and a rotor (2;3) as claimed in any of claims 1 to 4 characterised in that the hole or holes (9) is or are located in the rotor (2;3) adjacent the discharge.

6. A rotor (2;3) as claimed in any of the preceding claims having a pin or pins (9) of uniform cross-section along their length characterised in that, when the pin or pins (10) are in place in the rotor (2;3), the distance between the shaft axis (0) and the leading end (10a) of each pin (10) is greater than the distance between the shaft axis (0) and the end (10b) of the pins (10).

7. A rotor (2;3) as claimed in one of claims 1 to 5 characterised in that the pin or pins (10) are of non-uniform cross-section along their length.

## Patentansprüche

1. Rotor (2, 3) umfassend eine Rotortrommel (8) und eine sich axial durch diese erstreckende Welle (4), wobei der Rotor (2, 3) ein oder mehrere Löcher (9) aufweist, die sich jeweils quer zur Achse (0) der Welle (4) durch die Wand auf einer Seite der Trommel (8), durch die Welle (4) und teilweise durch die Wand auf der gegenüberliegenden Seite der Trommel erstrecken, und wobei ein Haltestift (10) in jedem Loch (9) angeordnet ist, dadurch gekennzeichnet, daß der Schwerpunkt (G) des oder jedes Haltestifts (10) exzentrisch verlagert ist und zwischen der Achse (0) der Welle (4) und der entsprechenden gegenüberliegenden Seite der Trommel liegt.

2. Rotor (2, 3) nach Anspruch 1, der zwei oder mehr Löcher (9) und zwei oder mehr Haltestifte (10) aufweist, dadurch gekennzeichnet, daß die Anordnung und Gestaltung der Stifte (10) so ist, daß sich bei Rotation des Rotors (2, 3) die auf die Stifte (10) ausgeübten Zentrifugalkräfte im wesentlichen ausgleichen.

3. Rotor (2, 3) nach Anspruch 2, der eine gerade Zahl von Zähnen aufweist, dadurch gekennzeichnet, daß der Rotor (2, 3) zwei Löcher (9) und zwei Stifte (10) aufweist und daß sich die Löcher in im wesentlichen entgegengesetzte Richtungen erstrecken.

4. Rotor (2, 3) nach Anspruch 2, der eine ungerade Zahl von Zähnen aufweist, dadurch gekennzeichnet, daß der Rotor (2, 3) drei Löcher (9) und drei Stifte (10) aufweist, und daß sich zwei der Löcher (9) in gleichen und entgegengesetzte spitzen Winkeln bezüglich dem dritten Loch (9) erstrecken.

5. Spirallader oder Spiralkompressor, umfassend einen Auslaß und einen Rotor (2, 3) nach einem der Ansprüche 1 bis 4, dadurch gekennzeichnet, daß das Loch oder die Löcher (9) in dem Rotor (2, 3) anschließend an den Auslaß angeordnet ist oder sind.

6. Rotor (2, 3) nach einem der vorhergehenden Ansprüche, der einen Stift oder Stifte (10) von gleichmäßigem Querschnitt entlang ihrer Länge aufweist, dadurch gekennzeichnet, daß, wenn der Stift oder die Stifte (10) in dem Rotor (2, 3) an Ort und Stelle sind, der Abstand zwischen der Wellenachse (0) und dem vorderen Ende (10a) jedes Stifts (10) größer ist als der Abstand zwischen der Wellenachse (0) und dem Ende (10b) der Stifte (10).

7. Rotor (2, 3) nach einem der Ansprüche 1 bis 5, dadurch gekennzeichnet, daß der Sitft oder die Stifte (10) entlang ihrer Länge einen ungleichmäßigen Querschnitt haben.

## Revendications

1. Rotor (2 ; 3) comprenant un barillet de rotor (8) et un arbre (4) se prolongeant axialement dans celui-ci, le rotor (2 ; 3) comportant un ou plusieurs trous (9) dont chacun s'étend transversalement à l'axe (0) de l'arbre (4) dans la paroi du barillet (8) sur un de ses côtés, en passant par l'arbre (4) et partiellement dans la paroi du barillet (8) sur son côté opposé, une broche de retenue (10) étant placée à l'intérieur de chaque trou (9), caractérisé en ce que le centre de gravité (G) de la broche de retenue ou de chaque broche de retenue (10) est disposé excentriquement et se trouve situé entre l'axe (0) de l'arbre (4) et le côté opposé respectif du barillet.

2. Rotor (2 ; 3) selon la revendication 1, comportant deux ou plusieurs trous (9) et deux ou plusieurs broches de retenue (10) caractérisé en ce que la disposition et la structure des broches (10) sont telles que, lors d'une rotation des rotors (2 ; 3), les forces centrifuges exercées sur les broches (10) s'équilibrent pratiquement.

3. Rotor (2 ; 3) selon la revendication 2, comportant un nombre pair de dents, caractérisé en ce que le rotor (2 ; 3) comporte deux trous (9) et deux broches (10) et que les trous se prolongent dans des directions pratiquement opposées.

4. Rotor (2 ; 3) selon la revendication 2, comportant un nombre impair de dents, caractérisé en ce que le rotor (2 ; 3) comporte trois trous (9) et trois broches (10) et que deux des trous (9) s'étendent à des angles égaux et obliquement opposés par rapport au troisième trou (9).

5. Surcompresseur du type à vis ou compresseur du type à vis comportant une évacuation et un rotor (2 ; 3) selon l'une quelconque des revendications 1 à 4, caractérisé en ce que le trou ou les trous (9) est ou sont placé(s) dans le rotor (2 ; 3) contigu à l'évacuation.

6. Rotor (2 ; 3) selon l'une quelconque des revendications précédentes, comportant une broche ou des broches (9) de section transversale uniforme suivant leur longueur, caractérisé en ce que, lorsque la broche ou les broches (10) sont en place dans le rotor (2 ; 3) la distance entre l'axe de l'arbre (0) et l'extrémité avant (10a) de chaque broche (10) est supérieure à la distance entre l'axe de l'arbre (0) et l'extrémité (10b) des broches (10).

7. Rotor (2 ; 3) selon l'une quelconque des revendications 1 à 5, caractérisé en ce que la broche ou les broches (10) sont d'une section transversale non-uniforme suivant leur longueur.

# Fig. 1

# Fig. 2

# Fig. 3

# Fig. 4

# Fig. 5

# Fig. 6

# Fig. 7

# Fig. 8

# Fig. 9

# Fig.10